# FASCICULE DE BREVET EUROPEEN

(11) **EP 3 502 605 B1**
(45) Date de publication et mention de la délivrance du brevet: **27.04.2022**
(21) Numéro de dépôt: 18214889.0
(22) Date de dépôt: 20.12.2018
(51) Int. Cl.: F27B 9/06, F27B 9/28, F27B 9/40, F27D 19/00, C21D 9/46, F27B 9/10, F27D 21/00, C21D 1/52, C21D 9/56, C21D 11/00, F27D 11/02, F27D 99/00

(54) **FOUR COMPRENANT UN SYSTÈME DE CONTRÔLE ASSOCIÉ À UNE INFORMATION RELATIVE À UNE ÉNERGIE ÉLECTRIQUE**
BACKOFEN, DER EIN KONTROLLSYSTEM VERBUNDEN MIT EINER INFORMATION ÜBER EINE ELEKTRISCHE ENERGIE UMFASST
OVEN COMPRISING A CONTROL SYSTEM ASSOCIATED WITH INFORMATION RELATING TO ELECTRICAL ENERGY

(30) Priorité: 20.12.2017 BE 201705967
(43) Date de publication de la demande: 26.06.2019
(73) Titulaire: Drever International S.A., 4031 Liège (Angleur) (BE)
(72) Inventeur: CRUTZEN, Jean-Pierre, 4053 Chaudfontaine (BE); DI GIOVANNI, Amedeo, 4367 Crisnée (BE); RUWET, Pierre, 4210 Marneffe (BE)
(74) Mandataire: Gevers Patents

(56) Documents cités:
- EP-A1- 2 738 502
- WO-A1-98/11761
- WO-A1-2016/210084
- JP-A- 2007 092 140

## Description

### Domaine technique

L'invention se rapporte à un four pour le traitement thermique de pièce(s) métallique(s) par défilement.

### Etat de la technique

Le document US 5 770 838 décrit un four pour le chauffage de pièces métalliques apte à contrôler la température des sections d'un four selon des plages de température prédéterminées. Le chauffage dans ce type de four est assuré par des tubes de chauffage radiant ainsi que par des éléments de chauffage par induction. Le contrôle de la température est assuré par un système de contrôle programmable qui se base sur des mesures de températures de zones du four et sur des températures cibles de pièce métallique.

Les éléments de chauffage par induction sont alimentés en énergie électrique et permettent de faire varier la température d'une pièce métallique à l'intérieur du four par induction. Les tubes de chauffage radiant sont des éléments de chauffage permettant de faire varier la température d'une pièce métallique à l'intérieur du four par la combustion d'un combustible.

Dans l'état de la technique présenté dans US 5 770 838, les éléments de chauffage par induction et les tubes de chauffage radiant sont contrôlés afin de permettre d'atteindre des températures de zones de four et des températures de bande en sortie de four prédéterminées. Le four décrit dans US 5 770 838 définit des consignes de chauffe vers les tubes de chauffage radiants et les éléments de chauffage par induction dans le but d'une plus grande maitrise de la température de bande en sortie de four mais ne permet pas une optimisation du fonctionnement du four.

Le document JP 2007-92140 A décrit un four comprenant des éléments de chauffe électrique et à combustible contrôlés par une unité de contrôle sur la base d'informations relatives à des températures de produits métallique, température de rouleaux, température de sortie de gaz. JP 2007-92140 A ne permet pas non plus une utilisation optimisée du four.

Le document EP 2738502 A1 décrit un four pour le traitement thermique de bandes d'acier. Un gaz protecteur chauffé par un brûleur à gaz est mis en circulation par un ventilateur, pour chauffer les bandes d'acier. Un chauffage électrique alimenté par le réseau électrique public a une capacité de chauffage correspondant sensiblement à la capacité de chauffage du brûleur à gaz. Le gaz protecteur peut être chauffé indépendamment avec le chauffage électrique, avec le brûleur à gaz éteint, à une température supérieure à la température de recuit de recristallisation.

WO 2016/210084 A1 décrit un four comprenant des éléments de chauffe contrôlés par une unité de contrôle permettant une réponse rapide. L'unité de contrôle décrite dans WO 2016/210084 A1 permet la prise en compte de mesures directes ou indirectes de paramètres d'un procédé et l'utilisation de modèles thermiques. WO 2016/210084 A1 ne permet pas une optimisation du fonctionnement du four.

### Résumé de l'invention

Selon un premier aspect, un des buts de l'invention est de fournir un four comprenant un premier élément de chauffe électrique et un deuxième élément de chauffe à combustible dont le fonctionnement peut être optimisé, notamment en terme de l'utilisation de ses premier (électrique) et deuxième (à combustible) éléments de chauffe. Un des buts de l'invention est également d'assurer une répartition des consignes de chauffe entre un premier élément de chauffe électrique alimenté en énergie électrique pour faire varier dans un four la température d'une pièce et un deuxième élément de chauffe à combustible alimenté en combustible pour faire varier la température de ladite pièce afin de garantir une température de sortie de produit prédéterminée pour toute valeur d'énergie électrique permettant d'alimenter le premier élément de chauffe électrique.

A cet effet, les inventeurs proposent un four pour le traitement thermique de produits métalliques par défilement et comprenant :
- un premier élément de chauffe électrique configuré pour être alimenté en énergie électrique et apte à émettre de la chaleur lorsqu'il est alimenté en énergie électrique ;
- un deuxième élément de chauffe à combustible configuré pour être alimenté par un combustible et apte à émettre de la chaleur lorsqu'il est alimenté par ledit combustible par combustion de ce dernier ;
   le premier élément de chauffe électrique et le deuxième élément de chauffe à combustible étant configurés pour faire varier la température d'un produit métallique dans ledit four lorsqu'au moins un des deux est en fonctionnement ;
- une unité de contrôle pour contrôler ledit premier élément de chauffe électrique et ledit deuxième élément de chauffe à combustible ;
caractérisé en ce que :
ledit four comprenant en outre :
- des moyens de communications aptes à obtenir une information relative à ladite énergie électrique nécessaire au fonctionnement du premier élément de chauffe électrique et aptes à communiquer avec :
   o un ou plusieurs dispositifs de transmission de données extérieurs au four, et,
   o ladite unité de contrôle,
   ladite unité de contrôle étant apte à utiliser cette information relative à ladite énergie électrique ; et en ce que
ladite unité de contrôle est configurée pour contrôler ledit premier élément de chauffe électrique sur la base de ladite information relative à ladite énergie électrique obtenue par lesdits moyens de communication, et en ce que l'unité de contrôle est apte à déterminer une vitesse de défilement de produits métalliques dans ledit four sur la base de l'information relative à l'énergie électrique.

Une gestion globale et intelligente des consignes de chauffe envoyées par l'unité de contrôle aux éléments de chauffe, pour faire varier la température d'une pièce métallique, alimentés en énergie électrique et en combustible est de préférence réalisée en prenant en compte au moins une information relative à l'énergie électrique. Cela permet un fonctionnement, une utilisation plus optimale des éléments de chauffe du four, et a pour conséquence une optimisation des coûts de fonctionnement d'un four selon l'invention. Les informations relatives à l'énergie électrique sont par exemple celles influençant directement ou indirectement la disponibilité et /ou le coût de l'énergie électrique. Ainsi, le four revendiqué avec ses premier (électrique) et deuxième (à combustible) éléments de chauffe, comprend des éléments techniques additionnels qui permettent une optimisation de leur fonctionnement et donc du four en entier, sur base d'une information relative à l'énergie électrique nécessaire au fonctionnement du premier élément de chauffe électrique. Les informations relatives à l'énergie électrique sont reçues par des moyens de communication connectés par exemple à un réseau ou un système fournissant une information relative à l'énergie électrique, par exemple les moyens de communication sont connectés à Internet, ou à un acteur du domaine électrique ou au réseau électrique. Un acteur du domaine électrique fait partie prenante directe dans le réseau électrique, comme par exemple un producteur, ou indirectement comme par exemple un négociateur, un régulateur, un système de surveillance ou de modélisation des paramètres influençant la fourniture d'électricité. De tels acteurs du domaine de l'électricité sont par exemple dotés de dispositifs de transmission de données externe au four. Par exemple une information relative à l'énergie électrique est un prix donné pendant un intervalle de temps donné ou encore une prévision de production et/ou de consommation, basée ou non basée sur des relevés, des modèles statistiques et/ou des modèles prévisionnels. De telles informations sont par exemple disponible sur les dispositifs de transmissions de données externe au four. De telles informations sont accessibles en établissant une communication entre les moyens de communication du four et les dispositifs de transmission de données externe au four comprenant de telles informations. Les moyens de communication sont aptes à obtenir une information relative à l'énergie électrique. L'énergie électrique étant nécessaire au fonctionnement du premier élément de chauffe électrique. Une information relative à l'énergie électrique peut également contenir une information relative à des conditions ou tendances météorologiques et/ou au climat, par exemple un ensoleillement, une température extérieure, une vitesse de vent, des précipitations ou encore à une date ou heure particulière ou une période, ou aussi des données relatives à un indicateur d'activité économique. Par exemple, les moyens de communication sont aptes à communiquer avec un ou plusieurs dispositifs de stockage de données externes au four pour obtenir une information relative à ladite énergie électrique. Le ou les dispositifs de transmission de données extérieurs au four permettent d'avoir accès à des informations en temps réel, des informations statistiques, des informations issues d'une modélisation, des informations historiques, des informations issues de prévisions, des informations issues de projections. L'unité de contrôle qui permet une gestion globale et intelligente des consignes de chauffe permet de préférence une optimisation des coûts de fonctionnement en prenant particulièrement en compte une information relative à l'énergie électrique. En outre, l'unité de contrôle peut par exemple prendre en compte des paramètres relatifs aux propriétés de produit métallique, à une vitesse de défilement de produit à traiter ou encore relatif à une information relative au combustible. Un combustible est un composé chimique qui, avec un comburant et de l'énergie, se consume dans une réaction chimique générant de la chaleur : la combustion.

Un avantage de l'invention est de permettre l'exploitation d'un four pour le traitement thermique de pièces métalliques, équipé d'éléments de chauffage pouvant faire varier la température d'une pièce métallique avec une source d'énergie électrique et combustible. Un autre avantage est de permettre une réduction des coûts de fonctionnement en optimisant l'utilisation d'une source d'énergie plutôt qu'une autre en fonction des prix des sources d'énergie.

Un avantage de l'invention, est d'offrir aux producteurs et aux distributeurs d'énergie électrique, un moyen de régulation de la consommation électrique en fonction de son abondance, soit une augmentation de la consommation électrique du four lorsque l'énergie électrique est trop abondante ou au contraire une limitation voir un arrêt de la consommation électrique des dispositifs alimentés en énergie de chauffage électrique du four selon l'invention.

De préférence, la prise en compte d'une information relative à l'énergie électrique par l'unité de contrôle permet de définir des consignes vers les éléments de chauffe, pour faire varier la température d'une pièce métallique, alimentés potentiellement en énergie électrique et en combustible. De préférence, l'unité de contrôle envoie une consigne vers au moins le deuxième élément de chauffe à combustible alimenté en combustible correspondant à une quantité de combustible à brûler ou à une quantité de chaleur à délivrer. En plus de cette consigne envoyée au deuxième élément de chauffe à combustible alimenté en combustible, l'unité de contrôle envoie une consigne à au moins un premier élément de chauffe électrique alimenté en énergie électrique correspondant à une quantité de chaleur à fournir pour atteindre la quantité de chaleur totale à fournir à une pièce métallique. L'unité de contrôle, quel que soit l'information relative à une énergie électrique permet d'avoir un four avec des points de fonctionnement bien contrôlés. En plus de permettre une optimisation des coûts de fonctionnement du four, celui-ci permet également un ajustement des points de fonctionnement répondant à des contraintes (par exemple : plis de bande, déport de produit, durée de vie) ainsi qu'une prise en compte globale du four lors d'un changement de produit ayant des caractéristiques différentes lors de son défilement. C'est-à-dire par exemple lors d'une transition. Une transition désigne lors d'un passage d'un premier produit vers un deuxième produit, un changement de caractéristique de produit, un changement de traitement de produit et/ou désigne par exemple un changement du point de fonctionnement de l'installation. Une transition peut s'avérer particulièrement coûteuse car une partie d'un produit n'ayant pas pu être traitée thermiquement dans ses limites de qualité doit être considérée comme rebut en fin de traitement thermique de façon partielle ou totale.

L'invention peut être adaptée à tout type de four comprenant à la fois un premier élément de chauffe électrique alimenté en énergie électrique et un deuxième élément de chauffe à combustible alimenté en combustible, ou un type de four faisant appel à des technologies différentes de chauffage électrique comme l'induction et les résistances électriques, chacune ayant ses caractéristiques propres comme le rendement, l'énergie réactive consommée et les harmoniques qui peuvent également avoir un impact sur la facture énergétique. Les consignes envoyées par l'unité de contrôle aux éléments de chauffe pour faire varier la température d'une pièce métallique sont déterminées par une ou plusieurs logiques et/ou algorithmes permettant la prise en compte d'informations en relation directe ou indirecte aux coûts de l'énergie, au traitement thermique à effectuer, aux dimensions et aux propriétés physico-chimiques de la pièce métallique ou d'une pièce métallique dont il est prévu de réaliser un traitement thermique. La prise en compte d'informations relatives à une altération des éléments de chauffe à combustible permet également une optimisation des coûts d'amortissements globaux du four selon l'invention. L'altération peut être limitée dans le temps, par exemple jusqu'au prochain entretien. Ou intégrer une altération durable des éléments de chauffe à combustible.

Un produit métallique est par exemple une succession de pièces ou de bandes métalliques, les bandes étant généralement déroulées à partir de bobines. Les produits sont généralement mis en enfilade pour un traitement en continu dans un four. Les produits peuvent être jointivement liés, comme par exemple les queues de bobines pouvant être soudées aux têtes de bobines suivantes et former une bande continue. Ou les produits peuvent être proches les uns des autres au point qu'une partie de l'un et de l'autre subissent les conditions similaires dans les fours lors de leur traitement.

De préférence les éléments de chauffe pour faire varier la température d'une pièce métallique sont des éléments de chauffe lents et rapides permettant lors d'une modification de température cible de produit et/ou de caractéristique de produit, d'atteindre une température cible de produit. Un élément de chauffe rapide permet d'atteindre une plage de température comprenant la température cible, plus rapidement et/ou plus précisément qu'avec un élément de chauffe lent et en particulier des éléments à composantes inertielles, comme par exemple des tubes de chauffage radiants.

De préférence, les éléments de chauffe rapides, par exemple un élément de chauffage par induction électrique, permettent lors d'une modification de température cible de produit, une modification du profil de température de bande dans le four mieux maîtrisée dans le temps qu'avec des éléments de chauffe lents, en particulier de type tube de chauffe radiant. De préférence, un avantage de ce mode de réalisation utilisant au moins un élément de chauffe rapide combiné avec un élément de chauffe lent est de pouvoir faire basculer une zone de maintien en chauffe dynamiquement, ou de la faire revenir en maintien dynamiquement. Des éléments de chauffe rapides sont par exemple alimentés en énergie électrique dans le cas d'un élément de chauffage par induction ou en combustible dans le cas d'un élément de chauffage par flamme directe. Un élément de chauffe lent comme un tube de chauffage radiant est alimenté en combustible et de préférence en gaz. Un élément de chauffe par résistance électrique est alimenté en électricité.

Les termes échange de chaleur et de chauffe devraient être interprétés comme relatif à la variation d'une température de produit. La variation d'une température peut être relative à une variation positive de température, mais peut par exemple être relative à une variation négative de température ou encore à une variation de température nulle nécessitant un équilibre entre la chaleur reçue par le produit (chaleur environnante) et la chaleur émise par le produit (maintien de la température du produit).

Une unité de contrôle peut comprendre plusieurs éléments pouvant communiquer entre eux afin de par exemple gérer un four divisé en plusieurs zones, chaque zone étant contrôlée par exemple par un élément constitutif de l'unité de contrôle. La gestion des tâches de l'unité de contrôle peut être répartie entre les plusieurs éléments constitutifs de l'unité de contrôle, un ou plusieurs de ces éléments pouvant par exemple exécuter des tâches de calcul. De préférence, il existe au moins une unité de contrôle pour contrôler au moins un premier élément de chauffe électrique et au moins un deuxième élément de chauffe à combustible.

Une base de données ou banque de données ou dispositif de stockage de données externe au four ou dispositif de transmission de données externe au four est de préférence une base/source d'information. Les données présentes dans la base de données sont par exemple des données historiques, des données statistiques, des données acquises en temps réel, des données comprenant une information prévisionnelle. Les données considérées sont directement liées aux produits énergétiques ou influençant indirectement des paramètres opérationnels de fourniture et de consommation d'énergie comme des données climatiques ou météorologiques. Une modélisation, par exemple une modélisation d'offre et de demande d'énergie, peut fournir les paramètres directs ou indirects relatifs aux utilisations énergétiques nécessaires aux processus thermique. Une modélisation météorologique, peut par exemple fournir des informations relatives à l'énergie électrique sur la base de données météorologiques influençant directement une production ou une consommation d'énergie électrique.

De préférence, une base de données comprenant des données acquises en temps réel est gérée par un système de gestion de bases de données temps réel. De préférence, un système de gestion de bases de données temps réel permet d'associer des valeurs temporelles à chaque donnée et chaque donnée possède un intervalle de temps pendant lequel elle a un niveau de validité. Ce type de système permet de gérer la double contrainte : la cohérence logique de données (validité donnée aux valeurs, intervalle de confiance) et la cohérence temporelle de données (durée de la validité, de leur intervalle de confiance).

Le four selon l'invention comprend par exemple
- des moyens de connexion à un poste de distribution électrique configurés pour alimenter en énergie électrique le premier élément de chauffe électrique, et,
- des moyens de connexion à un poste de distribution de combustible gazeux, ou de combustible gazeux liquéfié (GPL) pour alimenter en combustible le deuxième élément de chauffe à combustible.

De préférence ladite unité de contrôle est en outre configurée pour contrôler ledit deuxième élément de chauffe à combustible configuré pour être alimenté en combustible sur la base de ladite information relative à ladite énergie électrique.

L'avantage d'un contrôle du deuxième élément de chauffe à combustible alimenté en combustible par l'unité de contrôle sur la base de ladite information relative à ladite énergie électrique est de pouvoir transférer une partie de la consommation en énergie pour faire varier la température d'une pièce métallique, d'une source d'énergie électrique vers une source d'énergie de type combustible ou vice versa. Le transfert vers l'une ou l'autre source d'énergie est intéressant afin d'optimiser les coûts de fonctionnement d'un four, en particulier du point de vue des coûts de l'énergie. Par exemple, dans le cas où le transfert d'une source d'énergie vers une autre est total, l'on parle alors de basculement. Par exemple lors d'une période où les prix de l'électricité par quantité de chaleur transmise à la pièce métallique sont plus bas que le coût de combustible utilisé pour une même quantité de chaleur transmise à la pièce métallique, il est plus rentable de fournir une quantité de chaleur d'origine électrique plus importante que lors d'une période où les prix de l'électricité par quantité de chaleur transmise à la pièce métallique sont plus hauts que le coût de combustible utilisé pour une même quantité de chaleur transmise à la pièce métallique. Un même raisonnement sur la base d'un coût de combustible par rapport à un coût d'électricité s'applique également. Un avantage de pouvoir contrôler le premier élément de chauffe électrique et deuxième élément de chauffe à combustible sur la base d'une information relative à l'énergie électrique est de pouvoir garantir un basculement, partiel ou total vers l'une ou l'autre source d'énergie tout en garantissant d'atteindre des plages de température cible d'une pièce métallique, c'est-à-dire de fournir à la pièce métallique une même quantité de chaleur quelle que soit la source d'énergie utilisée et quelle qu'en soit le coût de l'une ou l'autre source d'énergie.

De préférence lesdits moyens de communication sont en outre configurés pour obtenir une information relative audit combustible, ladite unité de contrôle est en outre configurée pour contrôler ledit deuxième élément de chauffe à combustible sur la base de ladite information relative audit combustible. Ledit combustible étant nécessaire au fonctionnement du deuxième élément de chauffe à combustible.

Un avantage de pouvoir accéder à une information relative au coût du combustible est de pouvoir réaliser une comparaison entre un coût en énergie électrique et un coût en combustible plus finement connu et/ou estimé pour fournir une même quantité de chaleur à une pièce métallique. Des comparaisons en considérant un des données statistiques ou des prévisions issues de modèles sont également possibles et avantageuses. Il est connu que les variations sur une période courte des prix de l'électricité sont beaucoup plus grandes que les variations des prix du combustible. Les réseaux électriques sont interconnectés et leur équilibre résulte de l'offre et de la demande courante. L'énergie électrique est difficilement emmagasinable et les prix fluctuent afin de réguler l'équilibre du système. La volatilité des prix de l'électricité est telle que son prix est généralement reporté d'heure en heure ou même sur des périodes plus courtes. Le quart d'heure est une référence commune dans le domaine électrique. La volatilité peut même voir atteindre des prix négatif alors que la variation du prix des combustibles peut varier de quelques pourcent sur une journée. L'accès à une ou des informations relatives aux coûts de combustible et de l'électricité peut ou peuvent par exemple permettre d'anticiper une séquence de traitements thermiques en privilégiant un traitement thermique demandant une grande quantité de chaleur lorsqu'un prix relativement bas d'une source d'énergie est communiqué à l'unité de contrôle. L'accès à une information concernant le coût ou la disponibilité du combustible est principalement utilisé dans le cas où le four selon l'invention est relié à un réseau de distribution de combustible et notamment à un réseau de distribution de gaz.

Une information relative audit combustible est obtenue par les moyens de communication et est transmise à l'unité de contrôle. Les moyens de communication ont accès à une information relative au combustible en accédant à une base de données ou banque de données ou dispositif de stockage de données externe au four qui est de préférence une base/source d'information. Les données présentes dans la base de données sont par exemple des données historiques, des données statistiques, des données acquises en temps réel, des données comprenant une information prévisionnelle. Les données considérées sont directement liées aux combustibles ou influençant indirectement des paramètres opérationnels de fourniture de combustible comme des données climatiques ou météorologiques. Les différents modes de réalisation d'une information relative à une énergie électrique s'appliquent à une information relative à un combustible, *mutatis mutandis.*

De préférence, l'information relative au combustible comprend des informations ayant au moins une des propriétés suivantes : informations en temps réel, informations statistiques, informations issues d'une modélisation, informations historiques, informations issues de prévisions, informations issues de projections.

De préférence, l'unité de contrôle est configurée pour combiner ladite information relative à ladite énergie électrique et ladite information relative audit combustible et obtenir ainsi une information combinée, et pour contrôler sur la base de ladite information combinée :
- ledit premier élément de chauffe électrique et ledit deuxième élément de chauffe à combustible, ou
- ledit premier élément de chauffe électrique, ou
- ledit deuxième élément de chauffe à combustible.

Un avantage de combiner une information relative audit combustible et une information relative à l'électricité permet de disposer d'une information combinée reprenant les informations relatives au combustible et à l'électricité. Un autre avantage est de pouvoir ajouter à cette information combinée d'autres informations relatives à des prévisions des coûts de l'énergie, à des matériaux à traiter thermiquement, à des températures cibles à atteindre. Par exemple une logique de décision et/ou un algorithme mathématique permet de prendre en compte une multitude de paramètres et d'en faire ressortir une information combinée permettant à l'unité de contrôle de décider d'une stratégie orientée plus électrique, plus combustible, uniquement électrique, uniquement combustible ou bien équilibrée. Dans l'exemple d'une ligne de recuit et galvanisation en continu de produits plats, la vitesse de ligne est généralement limitée par le procédé d'essorage de zinc, qui règle l'épaisseur de zinc sur le produit. Dans le cas de produits fins, pouvant être recuits à grande vitesse suivant la capacité thermique du four de recuit, le procédé de galvanisation devient le facteur limitatif. Le four est en sous charge et il est alors aisé de faire plus appel à une source d'énergie ou à une autre sans restreindre la productivité de la ligne. Il est également possible d'imaginer des stratégies d'optimisation de coûts plus ou moins opportunistes en fonction d'autres contraintes de production (par exemple : durée de vie d'équipement, pli de bande, déport de produit, tel que mentionné plus loin). Une information combinée peut permettre la prise en compte de plus de paramètres que les informations relatives à l'électricité et/ou à un combustible.

De préférence ladite information relative à ladite énergie électrique comprend des informations ayant au moins une des propriétés suivantes : informations en temps réel, informations statistiques, informations issues d'une modélisation, informations historiques, informations issues de prévisions, informations issues de projections. Par exemple, ladite information relative à l'énergie électrique comprend au moins une composante d'une information issue de données historiques, statistiques, temps réel, issues de modèle, issues de prévision, issues de projection, issues de modèle en temps réel, issues de prévision en temps réel. De préférence, ladite information relative à ladite énergie électrique comprend au moins une information ou une combinaison d'information ayant au moins une des propriétés suivantes : temps réel ; statistique ; modélisation ; issue d'une base de données ; historique.

Un avantage que l'unité de contrôle ait accès par les moyens de communication à une source comprenant des informations de type temps réel est de pouvoir optimiser les coûts de fonctionnement du four suivant l'invention en temps réel. Un avantage que l'unité de contrôle ait accès par les moyens de communication à des informations statistiques, à des informations issues de modèles, à des prévisions, et ou à des informations en temps réel, permet au four selon ce mode de réalisation de pouvoir optimiser les coûts de fonctionnement en temps réel tout en prévoyant à l'avance une séquence de traitement thermique et/ou en anticipant des transferts de source d'énergie afin de garantir la qualité des produits traités. Un avantage que l'unité de contrôle ait accès par les moyens de communication à des informations statistiques permet au four selon ce mode de réalisation de pouvoir optimiser les coûts de fonctionnement sur la base des données statistiques tout en prévoyant à l'avance une séquence de traitement thermique des produits et/ou en anticipant des transferts de source d'énergie afin de garantir la qualité des produits traités. Par exemple cela permet de planifier des points de fonctionnement du four différents pour minimiser les risques de plis et/ou déports de bande, ou encore de passer des produits moins demandant en énergie ou moins demandant en une certaine énergie à certaines périodes où des coûts d'énergie sont moins avantageux. Selon un mode de réalisation particulièrement avantageux, la planification de la production peut être définie prioritairement en ce qui concerne la répartition énergétique pour une production en cours et de façon moins prioritaire pour la planification des productions sur un intervalle de temps relativement long, tout en garantissant une bonne prise en compte des informations relative à l'énergie électrique.

Une optimisation des coûts de fonctionnement du four selon l'invention est de préférence maximale lorsque des informations de type temps réel, issu de modèle, prévision et statistique sont prises en compte par l'unité de contrôle, sous la forme d'une information combinée ou non combinée. Un autre avantage de ce mode de réalisation est de pouvoir prendre en compte les variations prévisionnelles (sur base de statistiques court terme et/ou long terme), par exemple en prenant en compte les heures de pic de demande d'énergie le matin et le soir ou saisonnier se traduisant par un coût de l'énergie électrique très changeant, mais aussi sur base de prédictions qui viennent par exemple de modèle(s) de prédiction qui intègre(nt) les prévisions météo afin d'anticiper des coûts pour planifier des (séquences de) productions.

De préférence, lesdits un ou plusieurs dispositifs de transmission de données extérieurs au four comprenant une base de données externe au four à partir de laquelle les moyens de communication sont aptes à obtenir au moins l'une des information suivante :
- ladite information relative à ladite énergie électrique,
- ladite information relative audit combustible..

De préférence, un ou plusieurs dispositifs de transmission de données extérieurs au four comprenant une base de données externe au four à partir de laquelle les moyens de communication sont aptes à obtenir au moins ladite information relative audit combustible.

Selon la présente invention, l'unité de contrôle est apte à déterminer une vitesse de défilement de produits métalliques dans ledit four sur la de l' information relative à l'énergie électrique. Préférentiellement, l'unité de contrôle est également apte à déterminer une vitesse de défilement de produits métalliques dans ledit four sur la base de l'une de l' information relative audit combustible ou de l' information combinée obtenue à partir de ladite information relative à l'énergie électrique et ladite information relative audit combustible.

Un avantage de pouvoir faire varier une vitesse de défilement de produits métalliques est de pouvoir optimiser le rendement d'un procédé dans son ensemble, c'est-à-dire en prenant en compte le prix de fonctionnement d'un four pour une quantité de produit métallique traitée thermiquement. Par exemple dans le cas d'un produit métallique de type bande métallique ou dans le cas où des produits métalliques sont mis bout à bout, une variation d'une vitesse de défilement est apte à modifier de façon significative le rendement d'un procédé. Une variation de la vitesse de défilement peut par exemple être opportune dans le cas de prix de l'énergie électrique très bas, pouvant conduire à l'utilisation du premier élément de chauffe électrique alimenté en énergie électrique au maximum de sa capacité, celui-ci pouvant comprendre plusieurs éléments de chauffage à l'énergie électrique pour faire varier la température d'une pièce. Ainsi, le contrôle d'une vitesse de défilement, en association avec la prise en compte d'une information relative à une énergie électrique, ou à un combustible ou à une énergie électrique et à un combustible permet d'optimiser le rendement d'un procédé au-delà de ce que permet l'état de la technique. Un autre avantage de modifier la vitesse de défilement permet de modifier les points de fonctionnement du four ; le contrôle en vitesse étant une façon de réduire la vitesse pour limiter les consommations électriques ou augmenter la vitesse si une productivité accrue est possible à un coût raisonnable.

De préférence ledit premier élément de chauffe électrique comprend un élément de chauffe électrique par induction pour faire varier la température d'un produit métallique.

Un inducteur est un équipement de chauffe dont la puissance peut varier fortement sans induire des effets inertiels. Les éléments de chauffe rapide et en particulier les éléments de chauffe pour faire varier la température d'un produit métallique par induction permettent un contrôle plus dynamique des points de fonctionnement en comparaison de éléments de chauffage par radiation. Dans le cas d'un four équipé de éléments de chauffage par radiation, ceux-ci sont généralement plus grands, mettent en œuvre des équipements plus conséquents comme des murs, des rouleaux de transport et/ou de renvoi, ou éventuellement des tubes radiants. Ces sections radiantes ne permettent pas un contrôle aisé des points de fonctionnement dans le temps de par leur inertie plus grande. Un inducteur dispose d'une très faible inertie thermique puisqu'il induit une quantité de chaleur directement dans le matériau à traiter thermiquement sur une distance très courte, en mettant en oeuvre des équipements à faible masse globale, équipement qui eux-mêmes ne chauffent intrinsèquement pas au même niveau que les produits à traiter. Un élément chauffant de type induction est à même de s'adapter plus rapidement aux variations momentanées des coûts de l'électricité.

De préférence, un élément de chauffe rapide ou un élément de chauffe par induction est positionné en amont d'au moins un élément de chauffe de type tube de chauffage radiant. En amont est relatif au défilement du produit métallique. En amont signifie qu'une portion du produit métallique passe en premier à proximité de l'élément de chauffe rapide puis à proximité de l'élément de chauffe de type tube de chauffage radiant. Un principal intérêt de mettre l'élément de chauffage par induction ou inducteur en amont, est de le mettre dans une zone encore froide du four, ce qui est constructivement et/ou opérationnellement plus facile. Ce choix de position d'un inducteur en amont dans un four est à contre balancer avec une considération pour une gestion de transitoires. Pour une gestion de transitoire, il y aurait plus intérêt à mettre un élément de chauffe de type inducteur le plus tard possible dans le four.

Un four électrique, mais faisant appel à des technologies de chauffe différentes est couvert par l'invention dans la mesure où ces technologies se différencient par exemple par des rendements différents. Les inducteurs ont une électronique de puissance spécifique et sont généralement conçus pour des produits de référence, pour lesquels ils offrent des fonctionnements les plus optimaux possible, sans pouvoir cependant garantir un rendement global de 100%. Les chauffages par résistances électriques font appel à un système de commande généralement beaucoup plus simple et les résistances sont généralement entièrement intégrées dans le four, ce qui limite les pertes à ce niveau. La répartition de charge entre deux éléments de chauffage de technologie différente fait partie de l'invention.

Par exemple ledit premier élément de chauffe électrique comprend un élément de chauffe électrique par résistance électrique pour faire varier la température d'un produit métallique.

Une résistance électrique permet tout comme l'inducteur de faire varier la température d'un produit métallique à partir d'une énergie électrique. Une résistance électrique à l'avantage de pouvoir être mise en œuvre de façon plus simple, et peut être combinée dans un four équipé d'éléments de chauffage à combustion comme des tubes radiants par exemple. Par exemple des résistances électriques peuvent être activées dans le cas de prix de l'électricité très bas afin d'augmenter la capacité de chauffe du four selon ce mode de réalisation.

De préférence ledit deuxième élément de chauffe à combustible comprend au moins un tube de chauffage radiant ou au moins un élément de chauffe à combustible de chauffage par flamme directe.

Le deuxième élément de chauffe à combustible pour faire varier la température d'un produit métallique dans le cas d'un tube de chauffage radiant est contrôlé par l'unité de contrôle de façon directe ou indirecte. Un tube de chauffage radiant est par exemple alimenté en combustible. Un flux de combustible entrant dans l'élément de chauffe radiant ou tube de chauffage radiant est contrôlé par une vanne. Par exemple la vanne est une électrovanne contrôlée par l'unité de contrôle. Un élément de chauffage par flamme directe est contrôlé de façon similaire qu'un tube de chauffage radiant. De façon encore plus préférée, le deuxième élément de chauffe à combustible comprend au moins un tube de chauffage radiant et au moins un élément de chauffage par flamme directe.

Par exemple ledit combustible est un gaz combustible.

Un gaz combustible est plus facile à gérer sur une installation industrielle qu'un combustible liquide par exemple. L'utilisation d'un gaz combustible permet par exemple de limiter les résidus liés à la combustion par rapport à l'utilisation d'un combustible liquide par exemple.

De préférence ladite unité de contrôle est configurée pour collecter ou implémenter une information relative à une durée de vie d'au moins un élément constitutif dudit deuxième élément de chauffage à combustible ou dudit premier élément de chauffage électrique.

Par exemple un tube de chauffage radiant a une durée de vie liée à sa durée d'utilisation ainsi qu'à sa température d'utilisation. Les tubes de chauffage radiant subissent une détérioration accélérée avec la température, particulièrement à haute température. En général, à haute température un fluage accéléré des matériaux se met en place. Lors du fonctionnement d'un tube de chauffage radiant, plus la température de fonctionnement est élevée et/ou plus elle est durablement appliquée, plus un remplacement prématuré de des tubes radiants est à prévoir. Par exemple un tube de chauffage radiant aura une durée de vie plus longue si il est opéré à une température éloignée de la température où le fluage s'accélère tout au long de sa durée vie plutôt que si il est opéré à une température proche de la température à haut fluage. Plus la température est élevée et notamment plus elle est dans un domaine où le fluage du matériau est élevé, moins la durée de vie du tube de chauffage radiant est grande. Par exemple une température du tube radiant en un ou plusieurs points est mesurée ou déterminée et cette information est transmise à l'unité de contrôle. L'unité de contrôle est alors apte à considérer les conditions de fonctionnement d'un tube de chauffage radiant afin d'en estimer la durée de vie. Par exemple la durée de vie consommée et restante d'un tube de chauffage radiant est estimée à partir des données prises en compte lors de son fonctionnement. L'unité de contrôle est configurée pour prendre en compte cette durée de vie estimée des tubes de chauffage radiant par une logique de décision et/ou un algorithme mathématique pour la détermination des consignes envoyées aux premier élément de chauffe électrique et deuxième élément de chauffe à combustible sur la base de l'information relative à l'énergie électrique et/ou au combustible. Selon une réalisation préférée de ce mode de réalisation, le four comprend plusieurs tubes de chauffage radiant et l'unité de contrôle permet l'envoi d'une consigne de chauffe à chacun d'entre eux de manière séparée. Le coût global de fonctionnement des tubes de chauffage radiant est de préférence pris en compte dans le calcul des coûts de fonctionnement du four intégrant les coûts d'énergie. Par exemple même avec une électricité plus chère que la moyenne, il peut rester intéressant d'envoyer une consigne vers la partie électrique pour chauffer plus afin de préserver un tube de chauffage radiant en le maintenant à une température suffisamment éloignée d'une température de fluage.

Les résistances électriques se détériorent à haute température. Divers phénomènes chimiques se mettent en place en relation avec les gaz présents dans l'atmosphère des fours. Des matériaux spéciaux comme le molybdène peuvent être mis en place pour permettre d'atteindre des très hautes températures, mais ces matériaux restent sensibles aux composants présents - même à des niveaux très faibles - dans l'atmosphère du four qui peuvent conditionner leur durée de vie. La durée de vie des résistances chauffantes est aussi liée à leur température de fonctionnement, la détérioration s'accélérant avec la température, et ce particulièrement à haute température. Le coût global de fonctionnement des résistances de chauffage est de préférence pris en compte dans le calcul des coûts de fonctionnement du four intégrant les coûts d'énergie.

Préférentiellement, en fonction du coût de l'électricité, c'est-à-dire sur un temps relativement court, il y a intérêt à piloter différemment le four pour minimiser les risques de plis et/ou déports de bande. Sur un temps relativement long, il y a intérêt à planifier la production pour ajuster le passage de certains produits en fonction des risques de plis et/ou déports de bande.

De préférence les moyens de communication (9) sont en outre configurés pour envoyer des informations à un réseau électrique de type réseau électrique intelligent, et en ce que l'unité de contrôle est configurée pour envoyer par les moyens de communication une information audit réseau électrique de type réseau électrique intelligent, une information relative à une prévision de consommation d'énergie électrique et/ ou à un facteur de puissance.

Un avantage d'envoyer des informations vers un réseau électrique intelligent est de pouvoir avertir tout gestionnaire de réseau de distribution et/ou de production d'énergie électrique afin qu'il puisse anticiper les demandes estimées en énergie électrique. L'envoi d'informations par le four de l'invention permet par exemple à l'exploitant dudit four, d'espérer en retour des prix de l'énergie électrique plus bas en retour.

De préférence, ladite information relative à ladite énergie électrique comprend une information relative à un facteur de puissance, à une puissance active, ou à un cos PHI.

De façon préférée, le four permet la prise en compte des paramètres inertiels permet de minimiser ou d'éviter des transitions hors tolérances et autorise des transitions avec des variations de paramètres de produits plus étendues. Par exemple, cela permet d'utiliser des écarts de température entre deux bandes plus éloignées tout en optimisant les coûts de fonctionnement.

De préférence les éléments inertiels sont des éléments qui ont la caractéristique d'emmagasiner et de restituer une quantité de chaleur non négligeable par rapport à des éléments non-considérés comme élément inertiels.

Un paramètre inertiel est de préférence relatif à une quantité d'énergie, à un matériau donné, à une température donnée, à une position donnée dans un four et ayant des paramètres d'échanges thermiques donnés.

Par exemple, un autre inconvénient de l'état de la technique lorsque le produit suivant nécessite un apport énergétique moindre par rapport au produit actuel est que cela mène souvent à une surchauffe partielle ou totale d'un deuxième produit le suivant en défilement par rapport à une gamme de température cible alors que ce deuxième produit nécessite un apport énergétique moindre que le premier produit le précédant. Il en est de même lorsqu'un apport énergétique plus important est nécessaire, cela conduit à un apport de chaleur insuffisant. Un premier produit peut être une première portion de bande et un deuxième produit une deuxième portion de bande. De préférence, une première portion de bande précède une deuxième portion de bande.

Ainsi l'état de la technique ne permet pas une bonne gestion des transitoires lorsqu'un premier produit en défilement nécessite un apport énergétique différent d'un deuxième produit en défilement qui suit le premier produit en défilement. Par exemple, un premier produit en défilement nécessite un apport énergétique plus important qu'un deuxième produit en défilement, l'invention permet d'adapter l'échange énergétique nécessaire en prenant en compte les paramètres inertiels du four et permet d'anticiper un changement sur une portion de produit afin de fournir une quantité d'énergie adaptée lors du changement vers le produit suivant.

L'invention permet une meilleure gestion de ces transitoires en prenant en compte l'interaction énergétique des éléments inertiel du four, un cas particulier étant la température des éléments de chauffage radiant. L'avantage de prendre en compte la température par exemple des tubes radiants, comme tout élément inertiel, est que cela permet de prédire leur interaction énergétique dans les phases transitoires tout en veillant à rester dans une plage de température de bande cible pour les premier et deuxième produit. La gestion de la température de produit étant principalement définie par l'échange énergétique qui lui est délivré, auquel s'ajoute les échanges énergétiques avec les équipements du four. L'invention permet ainsi de mieux anticiper l'inertie thermique des éléments inertiels et en particulier des éléments à chauffage radiant, des parois du four, des rouleaux et de tout élément constitutif du four.

L'amélioration des transitions présente certaines limites pour un four dans lequel les consignes vers les éléments de chauffe sont uniquement définies sur la base d'une puissance de chauffe à fournir au produit et/ou une/des température/s de zones pour y arriver. Les fours peuvent comprendre une combinaison d'élément(s) de chauffe plus rapide(s) et d'élément(s) de chauffe plus lent(s). Pour étendre la plage de gestion de transitoires et ainsi avoir une plus grande flexibilité entre la température de traitement d'un premier et d'un deuxième produit, la prise en compte des paramètres inertiels semble alors utile et avantageuse.

L'invention et les avantages en découlant sont applicables à différents types de four, ayant des configurations différentes d'éléments de chauffe pour faire varier la température d'une bande et avec des éléments de chauffe permettant un chauffage direct et/ou indirect.

Selon un second aspect, les inventeurs proposent un procédé de contrôle d'un four pour le traitement thermique de produits métalliques, ledit four comprenant :
- un premier élément de chauffe électrique configuré pour être alimenté en énergie électrique et apte à émettre de la chaleur lorsqu'il est alimenté en énergie électrique ;
- un deuxième élément de chauffe à combustible configuré pour être alimenté par un combustible et apte à émettre de la chaleur lorsqu'il est alimenté par ledit combustible par combustion de ce dernier ;
   le premier élément de chauffe électrique et le deuxième élément de chauffe à combustible étant configurés pour faire varier la température d'un produit métallique dans ledit four lorsque au moins un des deux est en en fonctionnement ;
- une unité de contrôle pour contrôler ledit premier élément de chauffe électrique et ledit deuxième élément de chauffe à combustible ;
ledit procédé étant caractérisé en ce que :
- ledit four comprenant en outre des moyens de communications aptes à obtenir une information relative à ladite énergie électrique nécessaire au fonctionnement du premier élément de chauffe électrique et aptes à communiquer avec un ou plusieurs dispositifs de transmission de données extérieurs au four et ladite unité de contrôle, ladite unité de contrôle étant apte à utiliser cette information relative à ladite énergie électrique avec ladite unité de contrôle ;
et en ce que le procédé comprend les étapes suivantes :
a) lire avec les moyens de communication, à partir dudit un ou plusieurs dispositifs de transmission de données extérieurs au four, une information relative à une énergie électrique alimentant ledit premier élément de chauffe électrique ;
b) communiquer ladite information relative à une énergie électrique à l'unité de contrôle ;
c) analyser avec ladite unité de contrôle ladite information relative à une énergie électrique ;
d) contrôler ledit premier élément de chauffe électrique sur la base de ladite information relative à ladite énergie électrique obtenue par lesdits moyens de communication et analysée par ladite unité de contrôle,
e) déterminer, par l'unité de contrôle, une vitesse de défilement de produits métalliques dans ledit four sur la base de l'information relative à l'énergie électrique.

Les avantages et différents modes de réalisation du four selon le premier aspect s'appliquent au procédé selon le deuxième aspect de l'invention, *mutatis mutandis.*

De préférence, l'unité de contrôle du four est en outre configurée pour contrôler le deuxième élément de chauffe à combustible configuré pour être alimenté en combustible, sur la base de l'information relative à l'énergie électrique, et l'étape d) du procédé comprend en outre le fait de contrôler le deuxième élément de chauffe à combustible sur la base de ladite information relative à ladite énergie électrique obtenue par lesdits moyens de communication et analysée par ladite unité de contrôle.

De préférence, les moyens de communication du four sont en outre configurés pour obtenir une information relative au combustible et l'unité de contrôle est en outre configurée pour contrôler le deuxième élément de chauffe à combustible sur la base de l'information relative au combustible, et,
l'étape a) du procédé comprend en outre le fait de lire avec les moyens de communication une information relative au combustible alimentant ledit deuxième élément de chauffe à combustible ;
l'étape b) comprend en outre le fait de communiquer l'information relative au combustible à l'unité de contrôle ;
l'étape c) comprend en outre le fait d'analyser avec l'unité de contrôle l'information relative au combustible ;
l'étape d) comprend en outre le fait de contrôler le deuxième élément de chauffe à combustible sur la base de l'information relative au combustible obtenue par les moyens de communication et analysée par l'unité de contrôle.

De préférence, ladite information relative audit combustible comprend des informations ayant au moins une des propriétés suivantes :
- informations en temps réel,
- informations statistiques,
- informations issues d'une modélisation,
- informations historiques,
- informations issues de prévisions,
- informations issues de projections.

De préférence, l'unité de contrôle du four est configurée :
pour combiner l'information relative à l'énergie électrique et l'information relative au combustible et obtenir ainsi une information combinée, et pour contrôler sur la base de l'information combinée :
- le premier élément de chauffe électrique et le deuxième élément de chauffe à combustible, ou
- le premier élément de chauffe électrique, ou
- le deuxième élément de chauffe à combustible ; et
l'étape c) comprend en outre le fait de combiner l'information relative à l'énergie électrique et l'information relative au combustible et obtenir ainsi une information combinée ;
l'étape d) comprend en outre le fait de contrôler sur la base de l'information combinée obtenue à l'étape c) : le premier élément de chauffe électrique et le deuxième élément de chauffe à combustible, ou le premier élément de chauffe électrique, ou le deuxième élément de chauffe à combustible ;

De préférence, l'information relative à l'énergie électrique comprend des informations ayant au moins une des propriétés suivantes :
- informations en temps réel,
- informations statistiques,
- informations issues d'une modélisation,
- informations historiques,
- informations issues de prévisions,
- informations issues de projections.

De préférence, lesdits un ou plusieurs dispositifs de transmission de données extérieurs au four comprenant une base de données externe au four à partir de laquelle les moyens de communication sont aptes à obtenir au moins l'une des informations suivante :
- ladite information relative à ladite énergie électrique,
- ladite information relative audit combustible ;
l'étape a) du procédé comprend en outre le fait de lire sur une base de données externe au four comprise dans les moyens de transmission de données extérieurs au four, avec les moyens de communication, au moins l'une des informations suivante :
- ladite information relative à ladite énergie électrique,
- ladite information relative audit combustible.

De préférence, l'unité de contrôle du four est apte à déterminer une vitesse de défilement de produits métalliques dans le four sur la base d'au moins l'un des types d'informations suivants :
- information relative à l'énergie électrique,
- information relative audit combustible,
- information combinée obtenue à partir de l'information relative à l'énergie électrique et l'information relative au combustible ;
l'étape d) comprend en outre le fait de déterminer une vitesse de défilement de produits métalliques dans le four.

De préférence, le deuxième élément de chauffe à combustible du four comprend au moins un tube de chauffage radiant ou au moins un élément de chauffage par flamme directe,
l'étape d) comprend en outre le fait de contrôler au moins un tube de chauffage radiant ou au moins un élément de chauffage par flamme directe.

De préférence, le combustible est un gaz combustible.

De préférence, l'unité de contrôle est configurée pour collecter ou implémenter une information relative à une durée de vie d'au moins un élément du deuxième élément de chauffe à combustible ou du premier élément de chauffe électrique, le procédé comprend en outre l'étape suivante précédant l'étape d) :
z) collecter ou implémenter avec l'unité de contrôle une information relative à une durée de vie d'au moins un élément du deuxième élément de chauffe à combustible ou du premier élément de chauffe électrique ;
l'étape d) comprend en outre le fait de contrôler sur la base de l'information relative à une durée de vie d'au moins un élément du deuxième élément de chauffe à combustible ou du premier élément de chauffe électrique obtenue à l'étape z) : le premier élément de chauffe électrique et le deuxième élément de chauffe à combustible, ou le premier élément de chauffe électrique, ou le deuxième élément de chauffe à combustible.

De préférence, les moyens de communication sont en outre configurés pour envoyer des informations à un réseau électrique de type réseau électrique intelligent, et en ce que l'unité de contrôle est configurée pour envoyer par les moyens de communication une information audit réseau électrique de type réseau électrique intelligent, une information relative à une prévision de consommation d'énergie électrique et/ou à un facteur de puissance, en conséquence,
le procédé de l'invention comprend en outre l'étape additionnelle suivante :
y) envoyer des informations issues de l'unité de contrôle, par les moyens de communication, à un réseau électrique de type réseau électrique intelligent, une information relative à une prévision de consommation d'énergie électrique et/ou à un facteur de puissance.

De préférence, l'information relative à l'énergie électrique comprend une information relative à un facteur de puissance.

Selon un autre aspect, les inventeurs proposent un four pour le traitement thermique de produits métalliques par défilement et comprenant :
- un premier élément de chauffe électrique configuré pour être alimenté en énergie électrique et apte à émettre de la chaleur lorsqu'il est alimenté en énergie électrique ;
- un deuxième élément de chauffe à combustible configuré pour être alimenté par un combustible et apte à émettre de la chaleur lorsqu'il est alimenté par ledit combustible par combustion de ce dernier ou un troisième élément de chauffe électrique configuré pour être alimenté en énergie électrique et apte à émettre de la chaleur lorsqu'il est alimenté en énergie électrique;
le premier élément de chauffe électrique et le deuxième élément de chauffe à combustible ou le troisième élément de chauffe électrique étant configurés pour faire varier la température d'un produit métallique dans ledit four lorsqu'au moins un des deux est en fonctionnement ;
- une unité de contrôle pour contrôler ledit premier élément de chauffe électrique et ledit deuxième élément de chauffe à combustible ou ledit troisième élément de chauffe électrique;
caractérisé en ce que :
ledit four comprenant en outre :
- des moyens de communications aptes à obtenir une information relative à ladite énergie électrique nécessaire au fonctionnement du premier élément de chauffe électrique et aptes à communiquer avec :
   o un ou plusieurs dispositifs de transmission de données extérieurs au four, et,
   o ladite unité de contrôle,
   ladite unité de contrôle étant apte à utiliser cette information relative à ladite énergie électrique ; et en ce que
ladite unité de contrôle est configurée pour contrôler ledit premier élément de chauffe électrique sur la base de ladite information relative à ladite énergie électrique obtenue par lesdits moyens de communication.

Le troisième élément de chauffe électrique est un élément de chauffe électrique selon les modes de réalisation du premier élément de chauffe électrique. Un avantage de cet autre aspect de l'invention est de permettre l'exploitation d'un four pour le traitement thermique de pièces métalliques, équipé d'éléments de chauffage pouvant faire varier la température d'une pièce métallique avec une ou plusieurs sources d'énergie électrique et éventuellement de combustible. Un autre avantage est de permettre une réduction des coûts de fonctionnement en optimisant l'utilisation d'une source d'énergie plutôt qu'une autre en fonction des prix des sources d'énergie. Les avantages du premier aspect de l'invention s'appliquent pour cet autre aspect de l'invention mutatis mutandis.

Par exemple le premier élément de chauffe électrique alimenté en énergie électrique est un inducteur et le troisième élément de chauffe électrique alimenté en énergie électrique est une résistance électrique.

### Brève description des figures

Ces aspects ainsi que d'autres aspects de l'invention seront clarifiés dans la description détaillée de modes de réalisation particuliers de l'invention, référence étant faite aux dessins des figures qui seront détaillées ci-après. Les dessins des figures ne sont pas à l'échelle. Généralement, des éléments semblables sont dénotés par des références semblables dans les figures. La présence de numéros de référence aux dessins ne peut être considérée comme limitative, y compris lorsque ces numéros sont indiqués dans les revendications.

### Description détaillée de certains modes de réalisation de l'invention

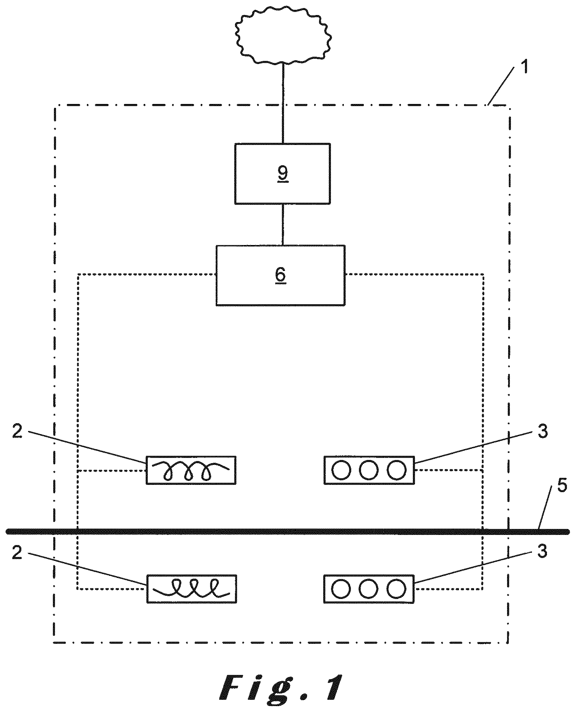

Les figures 1 à 6 montrent un four 1 pour la réalisation du traitement thermique d'un produit métallique 5, par exemple sous forme d'une bande en défilement. La figure 1 montre un four 1 comprenant un premier élément de chauffe électrique 2 alimenté en énergie électrique pour faire varier la température de la pièce métallique 5. Le four 1 comprend une ouverture dans laquelle le produit métallique 5 peut passer en défilement. Ce premier élément de chauffe électrique 2 est contrôlé par l'unité de contrôle 6. Le premier élément de chauffe électrique 2 est par exemple composé de plusieurs éléments. Par exemple le premier élément de chauffe électrique 2 est composé d'éléments disposés de part et d'autre du produit métallique 5 en défilement. Le four 1 comprend un deuxième élément de chauffe à combustible 3 alimenté en combustible pour faire varier la température de la pièce métallique 5 en défilement. Le deuxième élément de chauffe à combustible 3 est contrôlé par l'unité de contrôle 6. Le deuxième élément de chauffe à combustible 3 comprend de préférence plusieurs éléments disposés le long du trajet du produit métallique 5 en défilement. Ces plusieurs éléments sont par exemple des tubes de chauffage radiant ou des brûleurs à flamme directe. Les éléments de chauffage à combustible sont de préférence alimentés en gaz combustible, ceci n'excluant pas qu'ils sont par exemple alimentés en combustible de récupération ou en combustible liquide.

Une unité de contrôle 6 est par exemple un ordinateur. Par exemple, une unité de contrôle 6 peut être définie par un système à deux niveaux: un système de niveau bas permettant le contrôle des fours par des automates et un système de niveau supérieur pour former une architecture complète et permettant une gestion plus globale des éléments contrôlés par le système de niveau bas. Une unité de contrôle selon l'invention est reliée à des moyens de communication 9 qui permettent à l'unité de contrôle 6 d'accéder à, ou de recevoir, des informations influençant directement ou indirectement l'énergie électrique et/ou à un combustible. De préférence, les moyens de communication 9 sont configurés pour communiquer à l'unité de contrôle 6 des informations statistiques, des informations issues de modèles, des prévisions, des informations en temps réel. Par exemple les informations temps réel sont un prix de l'électricité et/ou de combustible en temps réel. Par exemple les informations temps réel sont des prévisions de coût de l'électricité et/ou de combustible dans un futur plus ou moins proche. Les moyens de communication 9 sont également configurés pour communiquer des informations statistiques et/ou des informations prévisionnelles directement ou indirectement liées à un coût de l'énergie électrique et/ou à un coût d'un combustible. Par exemple des informations directement liées à un coût de l'énergie sont des prévisions de production et/ou de consommation d'électricité. Par exemple des informations indirectement liées à un coût de l'énergie sont des données climatiques et/ou météorologiques qui de façon indirecte sont aptes à influencer une offre et/ou une demande en électricité et donc d'influencer les coûts.

Les moyens de communications 9 sont reliés à un système d'information, par exemple à un réseau informatique. Par exemple les moyens de communication 9 sont reliés à un réseau étendu, à un réseau ouvert comme Internet et/ou à un réseau local ou un réseau fermé/propriétaire. Par exemple les moyens de communications 9 sont reliés à un tel réseau par toute technologie, filaire, sans fil, directe ou passant par des transmetteurs, par des commutateurs, des routeurs et/ou des fournisseurs d'accès. De préférence, les moyens de communication 9 sont configurés pour recevoir des informations et pour envoyer des informations. Par exemple les moyens de communication 9 sont configurés pour envoyer et/ou recevoir des informations prévisionnelles à un distributeur d'électricité.

Le premier élément de chauffe électrique 2 comprend par exemple un élément de chauffage par induction. Le premier élément de chauffe électrique 2 comprend par exemple un élément de chauffage par résistance électrique. Par exemple le four est équipé d'éléments de chauffe comprenant au moins un élément de chauffage par induction et/ou au moins élément de chauffage par résistance. Par exemple le premier élément de chauffe électrique 2 est un élément de chauffage rapide lorsqu'il comprend un élément de chauffage par induction, c'est-à-dire qu'il permet de faire varier une charge de transfert de chaleur vers un produit métallique 5 plus ou moins rapidement.

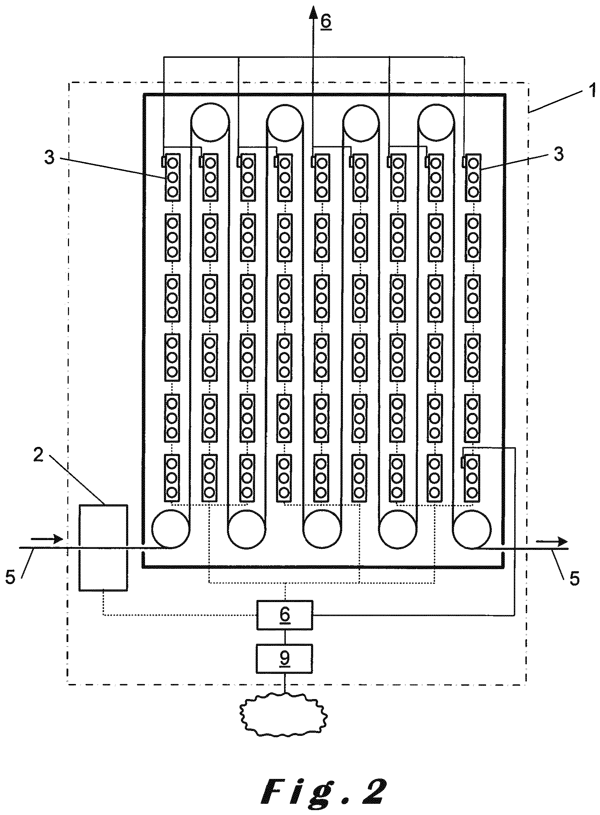

La figure 2 montre un four 1 tel que décrit en figure 1 comprenant un chauffage électrique 2 et une pluralité de tubes de chauffage radiant 3 alimentés en combustible. L'unité de contrôle 6 permet l'envoi d'une consigne de chauffe vers le premier élément de chauffe électrique 2 et vers le deuxième élément de chauffe à combustible 3, c'est-à-dire vers chacun des tubes de chauffage radiant ou vers un ou plusieurs groupes de tubes de chauffage radiant. Par exemple les groupes de tubes de chauffage radiant définissent des zones ou des portions de four 1. En figure 2, le premier élément de chauffe électrique 2 est représenté en amont du deuxième élément de chauffe à combustible 3. En général, un four 1 est divisé en sections, dont une ou des sections de chauffe, chaque section pouvant être divisée en zones, les zones contrôlant des unités de combustion, par exemple implantées dans des tubes radiants. Un cas extrême de la découpe est que chaque tube radiant est une zone. La notion de amont est notamment indiquée par le sens de défilement du produit métallique 5. Par exemple, les tubes de chauffage radiant sont positionnés en aval d'un premier élément de chauffe électrique 2 de chauffage par induction tel que représenté en figures 1 et 2.

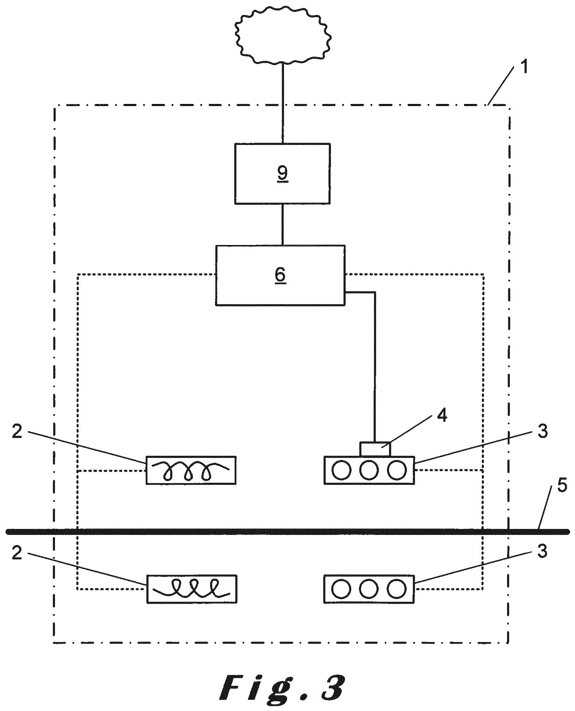

La figure 3 montre un four 1 pour le traitement thermique de produits métalliques 5. Dans ce mode de réalisation, un moyen de détermination 4 positionné au niveau du deuxième élément de chauffe à combustible 3 permet d'envoyer à l'unité de contrôle 6, une information relative à un paramètre inertiel du four 1. Cette information peut être relative à l'état de l'équipement pour déterminer sa durée de vie.

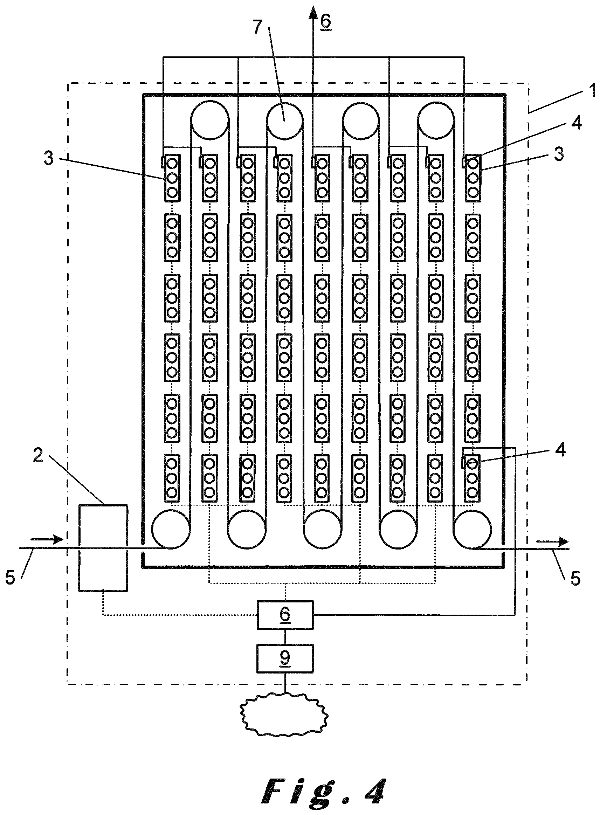

Le four 1 selon la figure 4 montre des rouleaux 7 pour transporter et/ou guider le produit métallique en défilement dans le four 1. Dans ce mode de réalisation, il est également possible, en prenant ou non en compte un paramètre inertiel du four 1, de prendre en compte une température de rouleau 7 qui est un paramètre important afin de mieux anticiper la formation de plis et des problèmes liés au décentrage de la bande. Les rouleaux 7 sont équipés de capteurs 4 de température permettant de déterminer des températures de rouleaux 7. Ces capteurs 4 de température sont reliés à l'unité de contrôle 6. Des valeurs de température peuvent aussi être déterminées par calcul ou par modélisation dans l'unité de contrôle 6. Les valeurs de température sont prises en compte avec les caractéristiques thermiques (la capacité calorifique, etc.) des rouleaux 7, ce qui permet la détermination d'un paramètre inertiel des rouleaux 7. L'unité de contrôle 6 permet d'envoyer une consigne vers les éléments de chauffe alimentés en énergie électrique 2 et en combustible 3 en fonction du/des paramètres inertiels du/des rouleaux 7. Cela permet une bonne prise en compte des paramètres inertiels notamment lors de modifications de points de fonctionnement et en particulier lors de transitoires, lors d'identification de risque de déport de bande ou de plis de bande 5.

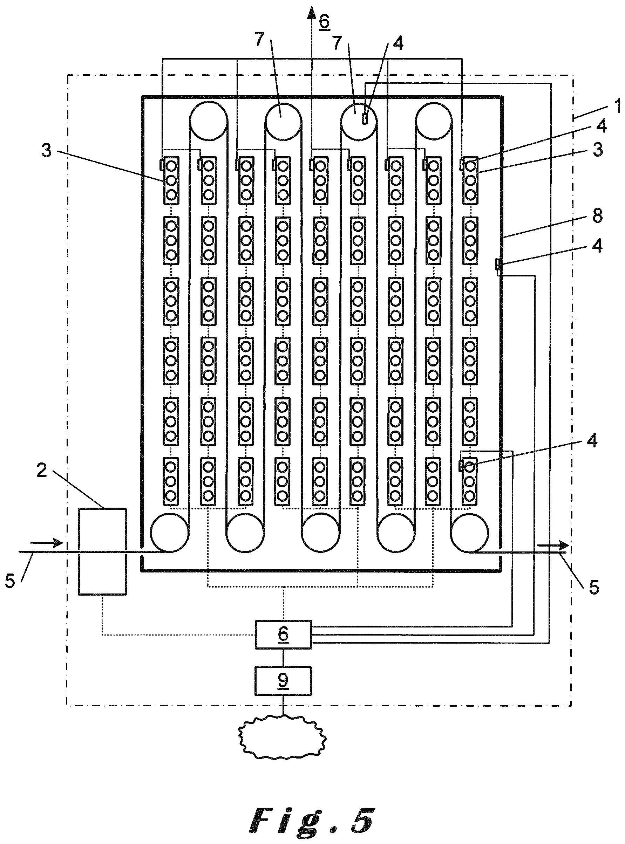

Le four 1 selon la figure 5 montre des parois 8 pour confiner le traitement du produit métallique 5 en défilement dans le four 1. Dans ce mode de réalisation, il est également possible, en prenant ou non en compte un paramètre inertiel du four 1, de prendre en compte une température de paroi 8 qui est un paramètre important afin de mieux anticiper la gestion du four. Les parois 8 sont équipées de capteurs 4 de température permettant de déterminer des températures de paroi 8. Ces capteurs 4 de température sont reliés à l'unité de contrôle 6. Des valeurs de température peuvent aussi être déterminées par calcul ou par modélisation dans l'unité de contrôle 6. Les valeurs de température sont prises en compte avec les caractéristiques thermiques (la capacité calorifique, etc.) des parois 8, ce qui permet la détermination d'un paramètre inertiel des parois 8. L'unité de contrôle 6 permet d'envoyer une consigne vers les éléments de chauffe alimentés en énergie électrique 2 et en combustible 3 en fonction du/des paramètres inertiels des parois 8. Cela permet une bonne prise en compte des paramètres inertiels notamment lors de modifications de points de fonctionnement et en particulier lors de transitoires, lors d'identification de risque de déport de bande ou de plis de bande 5.

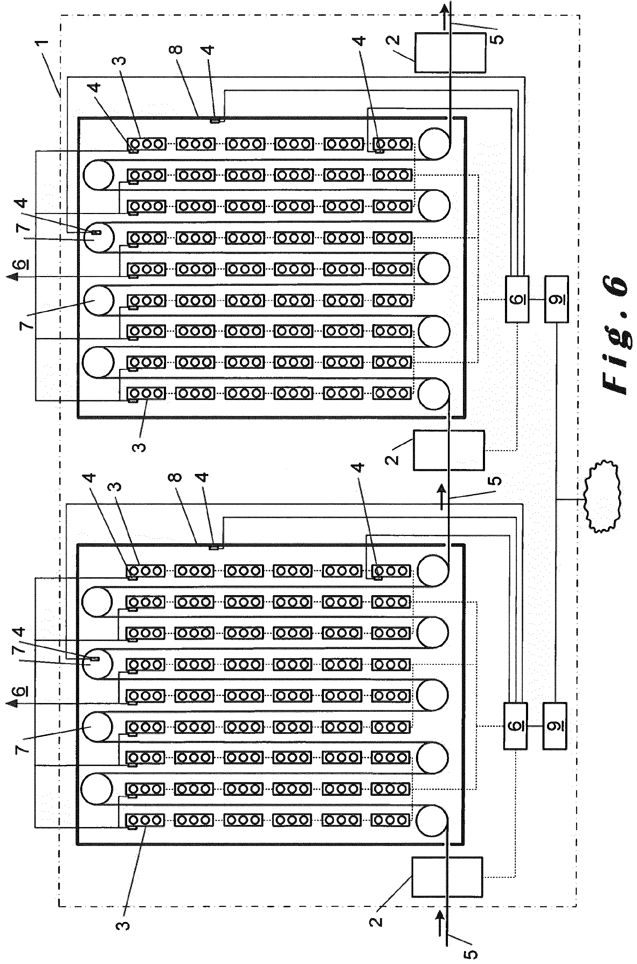

Le four 1 selon la figure 6 montre un four 1 comprenant deux fois en série les éléments du four 1 selon la figure 5. Le four 1 représenté en figure 6 comprend dans le sens de défilement du produit métallique 5, un premier élément de chauffe électrique 2 alimenté en énergie électrique, suivi d'un deuxième élément de chauffe à combustible 3 alimenté en combustible, lui-même suivi d'un premier élément de chauffe électrique 2 alimenté en énergie électrique, lui-même suivi d'un deuxième élément de chauffe à combustible 3 alimenté en combustible, finalement suivi par un premier élément de chauffe électrique 3 alimenté en énergie électrique. Le four 1 selon la figure 6 montre deux unités de contrôle 6 permettant la gestion des consignes vers les éléments de chauffe 2, 3 pour faire varier la température d'un produit métallique 5, chacune de ces unités de contrôle est connectée à des moyens de communications 9 distincts ou qui pourraient être commun. Ces moyens de communication 9 sont connectés à une infrastructure réseau telle que représentée par le nuage connecté aux moyens de communication 9. Le four 1 selon la figure 6 permet de démontrer que les modes de réalisations de l'invention peuvent mettre en œuvre une pluralité d'éléments de chauffe 2, 3 et ainsi s'adapter facilement à plusieurs types de configurations de four 1.

En résumé, l'invention peut également être décrite comme suit. Four 1 pour le traitement thermique d'un produit métallique par défilement et comprenant :
- un premier élément de chauffe électrique 2 et un deuxième élément de chauffe à combustible 3 pour faire varier la température d'un produit métallique 5 dans le four 1 ;
- une unité de contrôle 6 pour contrôler le premier élément de chauffe électrique 2 et le deuxième élément de chauffe à combustible 3 ;
- des moyens de communications 9 aptes à obtenir une information relative à ladite énergie électrique nécessaire au fonctionnement du premier élément de chauffe électrique 2 et aptes à communiquer avec un dispositif de transmission de données extérieur au four 1, et l'unité de contrôle 6 ;
l'unité de contrôle 6 est configurée pour contrôler le premier élément de chauffe électrique 2 sur la base de l'information relative à l'énergie électrique obtenue par les moyens de communication 9 et de déterminer une vitesse de défilement des produits métalliques dans le four sur la base de l'information relative à l'énergie électrique.

## Revendications

1. Four (1) pour le traitement thermique d'un produit métallique par défilement et comprenant :
- un premier élément de chauffe électrique (2) configuré pour être alimenté en énergie électrique et apte à émettre de la chaleur lorsqu'il est alimenté en énergie électrique ;
- un deuxième élément de chauffe à combustible (3) configuré pour être alimenté par un combustible et apte à émettre de la chaleur lorsqu'il est alimenté par ledit combustible, par combustion de ce dernier ;
le premier élément de chauffe électrique (2) et le deuxième élément de chauffe à combustible (3) étant configurés pour faire varier la température d'un produit métallique (5) dans ledit four (1) lorsqu'au moins un des deux est en fonctionnement ;
- une unité de contrôle (6) pour contrôler ledit premier élément de chauffe électrique (2) et ledit deuxième élément de chauffe à combustible (3) ;
**caractérisé en ce que** :
ledit four (1) comprend en outre :
- des moyens de communications (9) aptes à obtenir une information relative à ladite énergie électrique nécessaire au fonctionnement du premier élément de chauffe électrique (2) et aptes à communiquer avec :
∘ un ou plusieurs dispositifs de transmission de données extérieurs au four, et,
∘ ladite unité de contrôle (6),
ladite unité de contrôle (6) étant apte à utiliser cette information relative à ladite énergie électrique ; **en ce que**
ladite unité de contrôle (6) est configurée pour contrôler ledit premier élément de chauffe électrique (2) sur la base de ladite information relative à ladite énergie électrique obtenue par lesdits moyens de communication (9) ; et **en ce que**
l'unité de contrôle (6) est apte à déterminer une vitesse de défilement de produits métalliques (5) dans ledit four (1) sur la base de l'information relative à l'énergie électrique.

2. Four (1) selon la revendication précédente **caractérisé en ce que** ladite unité de contrôle (6) est en outre configurée pour contrôler ledit deuxième élément de chauffe à combustible (3) configuré pour être alimenté en combustible, sur la base de ladite information relative à ladite énergie électrique.

3. Four (1) selon l'une quelconque des revendications précédentes **caractérisé en ce que**
lesdits moyens de communication (9) sont en outre configurés pour obtenir une information relative audit combustible,
ladite unité de contrôle (6) est en outre configurée pour contrôler ledit deuxième élément de chauffe à combustible (3) sur la base de ladite information relative audit combustible.

4. Four (1) selon la revendication précédente **caractérisé en ce que** ladite information relative audit combustible comprend des informations ayant au moins une des propriétés suivantes :
- informations en temps réel,
- informations statistiques,
- informations issues d'une modélisation,
- informations historiques,
- informations issues de prévisions,
- informations issues de projections.

5. Four (1) selon l'une quelconque des revendications 3 à 4 **caractérisé en ce que** l'unité de contrôle (6) est configurée :
pour combiner ladite information relative à ladite énergie électrique et ladite information relative audit combustible et obtenir ainsi une information combinée, et pour
contrôler sur la base de ladite information combinée :
- ledit premier élément de chauffe électrique (2) et ledit deuxième élément de chauffe à combustible (3), ou
- ledit premier élément de chauffe électrique (2), ou
- ledit deuxième élément de chauffe à combustible (3).

6. Four (1) selon l'une quelconque des revendications 3 à 5 **caractérisé en ce que** l'unité de contrôle (6) est apte à déterminer la vitesse de défilement de produits métalliques (5) dans ledit four (1) sur la base d'une information combinée obtenue à partir de ladite information relative à l'énergie électrique et ladite information relative audit combustible.

7. Four (1) selon l'une quelconque des revendications précédentes **caractérisé en ce que** ladite information relative à ladite énergie électrique comprend des informations ayant au moins une des propriétés suivantes :
- informations en temps réel,
- informations statistiques,
- informations issues d'une modélisation,
- informations historiques,
- informations issues de prévisions,
- informations issues de projections.

8. Four (1) selon la revendication précédente **caractérisé en ce que** lesdits un ou plusieurs dispositifs de transmission de données extérieurs au four (1) comprenant une base de données externe au four à partir de laquelle les moyens de communication (9) sont aptes à obtenir au moins ladite information relative à ladite énergie électrique.

9. Four (1) selon l'une quelconque des revendications précédentes **caractérisé en ce que** ledit deuxième élément de chauffe à combustible (3) comprend au moins un tube de chauffage radiant ou au moins un élément de chauffage par flamme directe.

10. Four (1) selon l'une quelconque des revendications précédentes **caractérisé en ce que** ladite unité de contrôle (6) est configurée pour collecter ou implémenter une information relative à une durée de vie d'au moins un élément constitutif dudit deuxième élément de chauffe à combustible (3) ou dudit premier élément de chauffe électrique (2).

11. Four (1) selon l'une quelconque des revendications précédentes **caractérisé en ce que** les moyens de communication (9) sont en outre configurés pour envoyer des informations à un réseau électrique de type réseau électrique intelligent, et **en ce que** l'unité de contrôle (6) est configurée pour envoyer par les moyens de communication (9) une information audit réseau électrique de type réseau électrique intelligent, une information relative à une prévision de consommation d'énergie électrique et/ou à un facteur de puissance.

12. Four (1) selon l'une quelconque des revendications précédentes **caractérisé en ce que** ladite information relative à ladite énergie électrique comprend une information relative à un facteur de puissance.

13. Procédé de contrôle d'un four (1) pour le traitement thermique de produits métalliques, ledit four comprenant :
- un premier élément de chauffe électrique (2) configuré pour être alimenté en énergie électrique et apte à émettre de la chaleur lorsqu'il est alimenté en énergie électrique ;
- un deuxième élément de chauffe à combustible (3) configuré pour être alimenté par un combustible (3) et apte à émettre de la chaleur lorsqu'il est alimenté par ledit combustible (3) par combustion de ce dernier ;
le premier élément de chauffe électrique (2) et le deuxième élément de chauffe à combustible (3) étant configurés pour faire varier la température d'un produit métallique (5) dans ledit four (1) lorsqu'ils sont en fonctionnement ;
- une unité de contrôle (6) pour contrôler ledit premier élément de chauffe électrique (2) et ledit deuxième élément de chauffe à combustible (3) ;
ledit procédé étant **caractérisé en ce que** :
- ledit four comprenant en outre des moyens de communications (9) aptes à obtenir une information relative à ladite énergie électrique nécessaire au fonctionnement du premier élément de chauffe électrique (2) et aptes à communiquer avec un ou plusieurs dispositifs de transmission de données extérieurs au four et ladite unité de contrôle (6), ladite unité de contrôle (6) étant apte à utiliser cette information relative à ladite énergie électrique ;
et **en ce que** le procédé comprend les étapes suivantes :
a) lire avec les moyens de communication (9), à partir dudit un ou plusieurs dispositifs de transmission de données extérieurs au four (1), une information relative à une énergie électrique alimentant ledit premier élément de chauffe électrique (2) ;
b) communiquer ladite information relative à une énergie électrique à l'unité de contrôle (6) ;
c) analyser avec ladite unité de contrôle (6) ladite information relative à une énergie électrique ;
d) contrôler ledit premier élément de chauffe électrique (2) sur la base de ladite information relative à ladite énergie électrique obtenue par lesdits moyens de communication (9) et analysée par ladite unité de contrôle (6) ;
e) déterminer, par l'unité de contrôle (6), une vitesse de défilement de produits métalliques (5) dans ledit four (1) sur la base de l'information relative à l'énergie électrique.

14. Procédé selon la revendication précédente **caractérisé en ce que** l'unité de contrôle du four est en outre configurée pour contrôler le deuxième élément de chauffe à combustible (3) configuré pour être alimenté en combustible, sur la base de l'information relative à l'énergie électrique, et,
l'étape d) du procédé comprend en outre le fait de contrôler le deuxième élément de chauffe à combustible (3) sur la base de ladite information relative à ladite énergie électrique obtenue par lesdits moyens de communication (9) et analysée par ladite unité de contrôle (6).

15. Procédé selon la revendication précédente **caractérisé en ce que** l'unité de contrôle (6) est configurée pour collecter ou implémenter une information relative à une durée de vie d'au moins un élément du deuxième élément de chauffe à combustible (3) ou du premier élément de chauffe électrique (2), et **en ce que** ledit procédé comprenant en outre l'étape additionnelle suivante précédant l'étape d) :
z) collecter ou implémenter avec l'unité de contrôle une information relative à une durée de vie d'au moins un élément du deuxième élément de chauffe à combustible (3) ou du premier élément de chauffe électrique (2) ;
l'étape d) comprenant en outre le fait de contrôler sur la base de l'information relative à une durée de vie d'au moins un élément du deuxième élément de chauffe à combustible (3) ou du premier élément de chauffe électrique (2) obtenue à l'étape z), le premier élément de chauffe électrique (2) et le deuxième élément de chauffe à combustible (3), ou le premier élément de chauffe électrique (2), ou le deuxième élément de chauffe à combustible (3).

## Patentansprüche

1. Ofen (1) zur thermischen Behandlung eines Metallprodukts durch Durchzug und umfassend:
- ein erstes elektrisches Heizelement (2), das dazu ausgelegt ist, mit elektrischer Energie versorgt zu werden und imstande ist, Hitze abzugeben, wenn es mit elektrischer Energie versorgt wird;
- ein zweites Brennstoff-Heizelement (3), das dazu ausgelegt ist, mit einem Brennstoff versorgt zu werden und imstande ist, Hitze abzugeben, wenn es mit dem Brennstoff versorgt wird, durch Verbrennung dieses Letzteren;
wobei das erste elektrische Heizelement (2) und das zweite Brennstoff-Heizelement (3) dazu ausgelegt sind, die Temperatur eines Metallprodukts (5) im Ofen (1) variieren zu lassen, wenn mindestens eines der zwei betrieben wird;
- eine Steuereinheit (6) zum Steuern des ersten elektrischen Heizelements (2) und des zweiten Brennstoff-Heizelements (3);
**dadurch gekennzeichnet, dass**:
der Ofen (1) weiter umfasst:
- Kommunikationsmittel (9), die imstande sind, eine Information bezüglich der elektrischen Energie zu erhalten, die zum Betrieb des ersten elektrischen Heizelements (2) nötig ist, und imstande sind, zu kommunizieren mit:
einer oder mehreren äußeren Datenübertragungsvorrichtungen des Ofens, und
der Steuereinheit (6),
wobei die Steuereinheit (6) imstande ist, diese Information bezüglich der elektrischen Energie zu verwenden; und dadurch, dass
die Steuereinheit (6) dazu ausgelegt ist, das erste elektrische Heizelement (2) auf der Grundlage der Information bezüglich der elektrischen Energie, die von den Kommunikationsmitteln (9) erhalten wird, zu steuern; und dadurch, dass
die Steuereinheit (6) dazu ausgelegt ist, eine Durchlaufgeschwindigkeit von Metallprodukten (5) im Ofen (1) auf der Grundlage der Information bezüglich der elektrischen Energie zu bestimmen.

2. Ofen (1) nach dem vorstehenden Anspruch, **dadurch gekennzeichnet, dass** die Steuereinheit (6) weiter dazu ausgelegt ist, das zweite Brennstoff-Heizelement (3), das dazu ausgelegt ist, mit Brennstoff versorgt zu werden, auf der Grundlage der Information bezüglich der elektrischen Energie zu steuern.

3. Ofen (1) nach einem der vorstehenden Ansprüche, **dadurch gekennzeichnet, dass**
die Kommunikationsmittel (9) weiter dazu ausgelegt sind, eine Information bezüglich des Brennstoffs zu erhalten,
die Steuereinheit (6) weiter dazu ausgelegt ist, das zweite Brennstoff-Heizelement (3) auf der Grundlage der Information bezüglich des Brennstoffs zu steuern.

4. Ofen (1) nach dem vorstehenden Anspruch, **dadurch gekennzeichnet, dass** die Information bezüglich des Brennstoffs Informationen umfasst, die mindestens eine der folgenden Eigenschaften aufweisen:
- Informationen in Echtzeit,
- statistische Informationen,
- Informationen, die von einer Modellierung stammen,
- historische Informationen,
- Informationen, die von Vorhersagen stammen,
- Informationen, die von Projektionen stammen.

5. Ofen (1) nach einem der Ansprüche 3 bis 4, **dadurch gekennzeichnet, dass** die Steuereinheit (6) ausgelegt ist:
zum Kombinieren der Information bezüglich der elektrischen Energie und der Information bezüglich des Brennstoffs, und so eine kombinierte Information zu erhalten, und zum
Steuern auf der Grundlage der kombinierten Information:
- des ersten elektrischen Heizelements (2) und des zweiten Brennstoff-Heizelements (3), oder
- des ersten elektrischen Heizelements (2), oder
- des zweiten Brennstoff-Heizelements (3).

6. Ofen (1) nach einem der Ansprüche 3 bis 5, **dadurch gekennzeichnet, dass** die Steuereinheit (6) imstande ist, die Durchlaufgeschwindigkeit von Metallprodukten (5) im Ofen (1) auf der Grundlage einer kombinierten Information zu bestimmen, die ausgehend von der Information bezüglich der elektrischen Energie und der Information bezüglich des Brennstoffs erhalten wird.

7. Ofen (1) nach einem der vorstehenden Ansprüche, **dadurch gekennzeichnet, dass** die Information bezüglich der elektrischen Energie Informationen umfasst, die mindestens eine der folgenden Eigenschaften aufweisen:
- Informationen in Echtzeit,
- statistische Informationen,
- Informationen, die von einer Modellierung stammen,
- historische Informationen,
- Informationen, die von Vorhersagen stammen,
- Informationen, die von Projektionen stammen.

8. Ofen (1) nach dem vorstehenden Anspruch, **dadurch gekennzeichnet, dass** eine oder mehrere äußere Datenübertragungsvorrichtungen des Ofens (1) eine Datenbank außerhalb des Ofens umfassen, von der ausgehend die Kommunikationsmittel (9) imstande sind, mindestens eine Information bezüglich der elektrischen Energie zu erhalten.

9. Ofen (1) nach einem der vorstehenden Ansprüche, **dadurch gekennzeichnet, dass** das zweite Brennstoff-Heizelement (3) mindestens ein Strahlungsheizrohr oder mindestens ein Direktflammenheizelement umfasst.

10. Ofen (1) nach einem der vorstehenden Ansprüche, **dadurch gekennzeichnet, dass** die Steuereinheit (6) dazu ausgelegt ist, eine Information bezüglich einer Lebensdauer mindestens eines Bauteils des zweiten Brennstoff-Heizelements (3) oder des ersten elektrischen Heizelements (2) zu sammeln oder zu implementieren.

11. Ofen (1) nach einem der vorstehenden Ansprüche, **dadurch gekennzeichnet, dass** die Kommunikationsmittel (9) weiter dazu ausgelegt sind, Informationen an ein Stromnetz vom Typ intelligentes Stromnetz zu senden, und dadurch, dass die Steuereinheit (6) dazu ausgelegt ist, über die Kommunikationsmittel (9) eine Information an das Stromnetz vom Typ intelligentes Stromnetz zu senden, eine Information bezüglich einer Vorhersage des Verbrauchs elektrischer Energie und/oder eines Leistungsfaktors.

12. Ofen (1) nach einem der vorstehenden Ansprüche, **dadurch gekennzeichnet, dass** die Information bezüglich der elektrischen Energie eine Information bezüglich eines Leistungsfaktors umfasst.

13. Verfahren zum Steuern eines Ofens (1) zur thermischen Behandlung von Metallprodukten, wobei der Ofen umfasst:
- ein erstes elektrisches Heizelement (2), das dazu ausgelegt ist, mit elektrischer Energie versorgt zu werden und imstande ist, Hitze abzugeben, wenn es mit elektrischer Energie versorgt wird;
- ein zweites Brennstoff-Heizelement (3), das dazu ausgelegt ist, mit einem Brennstoff (3) versorgt zu werden und imstande ist, Hitze abzugeben, wenn es mit dem Brennstoff (3) versorgt wird, durch Verbrennung dieses Letzteren;
wobei das erste elektrische Heizelement (2) und das zweite Brennstoff-Heizelement (3) dazu ausgelegt sind, die Temperatur eines Metallprodukts (5) im Ofen (1) variieren zu lassen, wenn sie betrieben werden;
- eine Steuereinheit (6) zum Steuern des ersten elektrischen Heizelements (2) und des zweiten Brennstoff-Heizelements (3);
wobei das Verfahren **dadurch gekennzeichnet ist, dass**:
- der Ofen weiter Kommunikationsmittel (9) umfasst, die imstande sind, eine Information bezüglich der elektrischen Energie zu erhalten, die zum Betrieb des ersten elektrischen Heizelements (2) nötig ist, und imstande sind, mit einer oder mehreren äußeren Datenübertragungsvorrichtungen des Ofens und der Steuereinheit (6) zu kommunizieren, wobei die Steuereinheit (6) imstande ist, diese Information bezüglich der elektrischen Energie zu verwenden;
und dadurch, dass es die folgenden Schritte umfasst:
a) Lesen, mit den Kommunikationsmitteln (9) ausgehend von einer oder mehreren äußeren Datenübertragungsvorrichtungen des Ofens (1), einer Information bezüglich einer elektrischen Energie, die das erste elektrische Heizelement (2) versorgt;
b) Kommunizieren der Information bezüglich einer elektrischen Energie an die Steuereinheit (6);
c) Analysieren, mit der Steuereinheit (6), der Information bezüglich einer elektrischen Energie;
d) Steuern des ersten elektrischen Heizelements (2) auf der Grundlage der Information bezüglich der elektrischen Energie, die von den Kommunikationsmitteln (9) erhalten und von der Steuereinheit (6) analysiert wurde;
e) Bestimmen, durch die Steuereinheit (6), einer Durchlaufgeschwindigkeit von Metallprodukten (5) im Ofen (1) auf der Grundlage der Information bezüglich der elektrischen Energie.

14. Verfahren nach dem vorstehenden Anspruch, **dadurch gekennzeichnet, dass** die Steuereinheit des Ofens weiter dazu ausgelegt ist, das zweite Brennstoff-Heizelement (3), das dazu ausgelegt ist, mit Brennstoff versorgt zu werden, auf der Grundlage der Information bezüglich der elektrischen Energie zu steuern, und der Schritt d) des Verfahrens weiter die Tatsache des Steuerns des zweiten Kraftstoff-Heizelements (3) auf der Grundlage der Information bezüglich des elektrischen Energie, die von den Kommunikationsmitteln (9) erhalten und von der Steuereinheit (6) analysiert wurde, umfasst.

15. Verfahren nach dem vorstehenden Anspruch, **dadurch gekennzeichnet, dass** die Steuereinheit (6) dazu ausgelegt ist, eine Information bezüglich einer Lebensdauer mindestens eines Elements des zweiten Brennstoff-Heizelements (3) oder des ersten elektrischen Heizelements (2) zu sammeln oder zu implementieren und dadurch, dass das Verfahren weiter den folgenden zusätzlichen Schritt vor Schritt d) umfasst:
z) Sammeln oder Implementieren, mit der Steuereinheit, einer Information bezüglich einer Lebensdauer mindestens eines Elements des zweiten Brennstoff-Heizelements (3) oder des ersten elektrischen Heizelements (2);
wobei der Schritt d) weiter die Tatsache des Steuerns, auf der Grundlage der Information bezüglich einer Lebensdauer mindestens eines Elements des zweiten Kraftstoff-Heizelements (3) oder des ersten elektrischen Heizelements (2), die im Schritt z) erhalten wurde, des ersten elektrischen Heizelements (2) und des zweiten Brennstoff-Heizelements (3), oder des ersten elektrischen Heizelements (2), oder des zweiten Brennstoff-Heizelements (3) umfasst.

## Claims

1. Oven (1) for the heat treatment of a metal product by scrolling and comprising:
- a first electrical heating element (2) configured to be powered with electrical energy and capable of emitting heat when it is powered with electrical energy;
- a second fuel heating element (3) configured to be powered by a fuel and capable of emitting heat when it is powered by said fuel, by combustion of the latter;
the first electrical heating element (2) and the second fuel heating element (3) being configured to make the temperature of a metal product (5) vary in said oven (1) when at least one of the two is in operation;
- a control unit (6) to control said first electrical heating element (2) and said second fuel heating element (3);
**characterised in that**:
said oven (1) further comprises:
- communication means (9) capable of obtaining information relating to said electrical energy necessary for the operation of the first electrical heating element (2) and capable of communicating with:
• one or more devices for transmitting external data to the oven, and,
• said control unit (6),
said control unit (6) being capable of using this information relating to said electrical energy; **in that**
said control unit (6) is configured to control said first electrical heating element (2) based on said information relating to said electrical energy obtained by said communication means (9); and **in that**
the control unit (6) is capable of determining a scrolling speed of metal products (5) in said oven (1) based on the information relating to the electrical energy.

2. Oven (1) according to the preceding claim, **characterised in that** said control unit (6) is further configured to control said second fuel heating element (3) configured to be powered with fuel, based on said information relating to said electrical energy.

3. Oven (1) according to any one of the preceding claims, **characterised in that**
said communication means (9) are further configured to obtain information relating to said fuel,
said control unit (6) is further configured to control said second fuel heating element (3) based on said information relating to said fuel.

4. Oven (1) according to the preceding claim, **characterised in that** said information relating to said fuel comprises information having at least one of the following properties:
- real time information,
- statistical information,
- information coming from a modelling,
- historical information,
- information coming from forecasts,
- information coming from projections.

5. Oven (1) according to any one of claims 3 to 4, **characterised in that** the control unit (6) is configured:
to combine said information relating to said electrical energy and said information relating to said fuel and to thus obtain combined information, and to
control, based on said combined information:
- said first electrical heating element (2) and said second fuel heating element (3), or
- said electrical heating element (2), or
- said second fuel heating element (3).

6. Oven (1) according to any one of claims 3 to 5, **characterised in that** the control unit (6) is capable of determining the scrolling speed of metal products (5) in said oven (1) based on combined information obtained from said information relating to the electrical energy and said information relating to said fuel.

7. Oven (1) according to any one of the preceding claims, **characterised in that** said information relating to said electrical energy comprises information having at least one of the following properties:
- real time information,
- statistical information,
- information coming from a modelling,
- historical information,
- information coming from forecasts,
- information coming from projections.

8. Oven (1) according to the preceding claim, **characterised in that** said one or more devices for transmitting external data to the oven (1) comprising an external database to the oven from which the communication means (9) are capable of obtaining at least said information relating to said electrical energy.

9. Oven (1) according to any one of the preceding claims, **characterised in that** said second fuel heating element (3) comprises at least one radiant heating tube or at least one direct flame heating element.

10. Oven (1) according to any one of the preceding claims, **characterised in that** said control unit (6) is configured to collect or implement information relating to a lifespan of at least one constitutive element of said second fuel heating element (3) or of said first electrical heating element (2).

11. Oven (1) according to any one of the preceding claims, **characterised in that** the communication means (9) are further configured to send information to a smart electrical network-type electrical network, and **in that** the control unit (6) is configured to send by the communication means (9), information to said smart electrical network-type electrical network, information relating to a forecast of electrical energy consumption and/or to a power factor.

12. Oven (1) according to any one of the preceding claims, **characterised in that** said information relating to said electrical energy comprises information relating to a power factor.

13. Method for controlling an oven (1) for the heat treatment of metal products, said oven comprising:
- a first electrical heating element (2) configured to be powered with electrical energy and capable of emitting heat when it is powered with electrical energy;
- a second fuel heating element (3) configured to be powered by a fuel (3) and capable of emitting heat when it is powered by said fuel (3) by combustion of the latter;
the first electrical heating element (2) and the second fuel heating element (3) being configured to make the temperature of a metal product (5) vary in said oven (1) when they are in operation;
- a control unit (6) to control said first electrical heating element (2) and said second fuel heating element (3);
said method being **characterised in that**:
- said oven further comprising communication means (9) capable of obtaining information relating to said electrical energy necessary for the operation of the first electrical heating element (2) and capable of communicating with one or more devices for transmitting external data to the oven and said control unit (6), said control unit (6) being capable of using this information relating to said electrical energy;
and **in that** the method comprises the following steps:
a) reading with the communication means (9), from said one or more devices for transmitting external data to the oven (1), information relating to electrical energy powering said first electrical heating element (2);
b) communicating said information relating to electrical energy to the control unit (6);
c) analysing with said control unit (6), said information relating to electrical energy;
d) controlling said first electrical heating element (2) based on said information relating to said electrical energy obtained by said communication means (9) and analysed by said control unit (6);
e) determining, by the control unit (6), a scrolling speed of metal products (5) in said oven (1) based on information relating to the electrical energy.

14. Method according to the preceding claim, **characterised in that** the control unit of the oven is further configured to control the second fuel heating element (3) configured to be powered with fuel, based on the information relating to the electrical energy, and, step d) of the method further comprises the action of controlling the second fuel heating element (3) based on said information relating to said electrical energy obtained by said communication means (9) and analysed by said control unit (6).

15. Method according to the preceding claim, **characterised in that** the control unit (6) is configured to collect or implement information relating to a lifespan of at least one element of the second fuel heating element (3) or of the first electrical heating element (2), and **in that** said method further comprising the following additional step preceding step d):
z) collecting or implementing with the control unit, information relating to a lifespan of at least one element of the second fuel heating element (3) or of the first electrical heating element (2);
step d) further comprising the action of controlling based on the information relating to a lifespan of at least one element of the second fuel heating element (3) or of the first electrical heating element (2) obtained in step z), the first electrical heating element (2) and the second fuel heating element (3), or the first electrical heating element (2), or the second fuel heating element (3).
